# EUROPEAN PATENT SPECIFICATION

(11) **EP 2 412 578 B1**
(45) Date of publication and mention of the grant of the patent: **11.09.2013**
(21) Application number: 11174866.1
(22) Date of filing: 21.07.2011
(51) Int. Cl.: B60R 11/02

(54) **Device for detachably attaching a holder for an electronic device**
Vorrichtung zur abnehmbaren Befestigung eines Halters für eine elektronische Vorrichtung
Dispositif pour fixer de manière amovible un support sur un dispositif électronique

(30) Priority: 30.07.2010 NL 2005178
(43) Date of publication of application: 01.02.2012
(73) Proprietor: Vogel's Holding B.V., 5628 DB Eindhoven (NL)
(72) Inventor: Grolle, Paul Robbert, 5708 AB HELMOND (NL); Luijben, Stefan Arthur, 5707 RZ HELMOND (NL)
(74) Representative: Algemeen Octrooi- en Merkenbureau

(56) References cited:
- EP-A1- 1 894 788
- DE-U1-202008 010 584
- US-A1- 2006 079 306

## Description

The present invention relates to a device for detachably attaching a holder for an electronic device to at least one support of a headrest of a vehicle-mounted seat, wherein the device comprises a first attachment part and a second attachment part to be detachably connected to the first attachment part, one of said first and said second attachment parts being connectable to the holder, said device comprising connecting means connected to the first and the second attachment part for detachably connecting the first attachment part to the second attachment part, between the first and second attachment parts a receiving opening is formed in an interconnected position of said first attachment part and said second attachment part for attaching the device to the support of the headrest via said opening, the device further comprises at least one operating element connected to the connecting means.

Such a device is generally known, it is for example used for attaching a viewing screen of a portable DVD player to a rear side of a seat in a car.

The known device may be a mounting bracket, which is attached to supports of a headrest of the seat. Said mounting bracket may consist of two parts, which are connected together by means of socket screws.

It is a drawback of the known device that detaching the device is relatively difficult. With a view to preventing theft from the car it is desirable for the device to be relatively easy to detach.

Accordingly it is an object of the invention to provide a device which can be detached from the seat in a relatively simple manner. In order to accomplish that object, the invention provides a device of the kind described in the introduction, the device further comprises at least one operating element connected to the connecting means wherein the operating element can be moved to at least a first position for moving the connecting means to a release position for the purpose of releasing the connection between the first attachment part and the second attachment part and so that the first and the second attachment parts can be directly disconnected from each other. The operating element allows the user to move the connecting means directly to a release position by means of a simple movement of the operating element. Disconnecting the first attachment part and the second attachment part from each other can thus take place relatively quickly. Since the operating element is connected to the connecting means, the user can at all times move the connecting means to their release position. The user does not need any additional tools such as a screwdriver or an Allen key for doing so. The device according to the present invention thus makes it possible to detach the device quickly from the vehicle-mounted seat. The object of the invention is thus accomplished.

German Utility model DE 20 2008 010584 U1 discloses a device for attaching an electronic device to a headrest of a car seat according to the preamble of claim 1. The device comprises a crossbar having two slits on opposite ends. In the slits, hooks are provided. The hooks are mountable around supporting rods of the head rest. A connecting bar is connectable to the crossbar for mounting the electronic device.

US patent application US 2006/079306 A1 discloses a portable mounting device for mounting a mobile entertainment unit onto two spaced apart supporters of a headrest. The device includes an elongated housing, a fixture mounting unit and an entertainment mounting device. The fixture mounting unit includes two retention arms spacedly provided on the fixture mounting side of the elongated housing for detachably engaging with the supporters respectively. The retention distance between the retention arms is adjustable by means of an adjuster in the form of a screw bar to selectively adjust the retention distance between the retention arms.

It may be possible for the operating element to be movable to a second position for the purpose of thus moving the connecting means to an engaging position in a connected condition of the first and the second attachment part. This embodiment makes it possible to use the operating element also for connecting the first and the second attachment part together. This makes it possible to attach the device to the vehicle seat in a quick and simple manner.

Preferably, the device is provided with pushing means for pushing the operating element to the second position. In this way the connecting means will always be forced to an engaging position. In this way undesirable detachment of the first attachment part and the second attachment part from each other is prevented. The reliability and safety of the device are thus ensured.

To enable the user to gain easy access to the operating element, the operating element is preferably provided on a wall, preferably an upper wall, of the first or the second attachment part.

In one embodiment, the operating element is movable substantially parallel to said wall. The operating element is capable of sliding movement relative to said wall. In this way a compact construction can be realised.

The reliability of the connection can be further enhanced in that the connecting means comprise an engaging element connected to the first or the second attachment part as well as an engaging member connected to the other attachment part. The engaging element is designed to engage the engaging member in an engaging position of the connecting means for the purpose of retaining the connected condition of the first and the second attachment part. The connecting means are furthermore designed so that the engaging member is movable relative to the engaging element in a release position. The engaging element may be connected to the first attachment part, for example. The engaging member will in that case be disposed on the second attachment part. The connecting means must be in a release position when the first attachment part and the second attachment part are being connected together. Alternatively it is also possible within the framework of the invention for the connecting means to be pushed to a release position when the first attachment part and the second attachment part are being connected together, precisely on account of said connection being made, without any separate action on the part of the user, other than connecting the first attachment part and the second attachment part together, for moving the connecting means to the release position being required. When the two attachment parts are connected together in the correct position, the connecting means will be moved to an engaging position, which may take place autonomously under the influence of spring force, for example, and the engaging element will engage the engaging member. In this way the first and the second attachment part are retained in a connected condition. Only when the operating element is operated, i.e. moved to the first position, will the connecting means be returned to the release position, such that the attachment parts can be detached from each other again.

At least part of a contour of the engaging element may define an engaging edge designed to engage the engaging member. The engaging edge will exert a pressure force on the engaging member, thereby preventing the engaging member from moving relative to the engaging element.

The engaging element is preferably pivot-mounted. The engaging element is capable of pivoting movement between an engaging position, in which the engaging element engages the engaging member, and a non-engaging position, in which the engaging element releases the engaging member, so that movement of the engaging member relative to the engaging element is possible. Because the engaging element can pivot between the above two positions, a relatively compact construction of the connecting means can be realised without having to make any concessions regarding the reliability of the connection.

Preferably, the contour of the engaging element is configured so that the engaging edge is designed to engage two substantially opposite wall parts of the engaging member at an angle by pivoting movement. The engaging edge exerts a pressure force on both sides of the engaging member, as it were. As a result, the engaging element will clampingly engage the engaging member. This will prevent movement of the engaging member relative to the engaging element.

Preferably, the engaging element comprises a recess which forms at least part of the engaging edge. The recess and the cross-section of the engaging member are designed to conform to each other such that the engaging member can move through the recess in a release position. This makes it possible to realise a compact construction.

The recess may be a hole provided in the engaging element. The engaging member can move through said hole. The hole enables the engaging element to engage the engaging member on both sides, or, in other words, both of the substantially opposite wall parts of the engaging member, with sufficient clamping force. The hole makes it possible to realise a durable and reliable construction of the engaging element.

The hole may be substantially ellipsoidal or circular in shape. Other configurations, for example a rectangular or a square hole, are also conceivable, however.

In order to further increase the safety of the device, the device may be provided with pushing means for pushing the engaging element to an engaging position.

The pushing means for pushing the operating element to the second position may be identical to the pushing means for pushing the engaging element to an engaging position. This makes it possible to realise a more compact construction of the device.

In one embodiment the pushing means comprise a spring.

The engaging element may also be designed to function as a leaf spring for forming the pushing means. The engaging element is configured so that it pushes itself to an engaging position. This can be realised, for example, by connecting the engaging element to the attachment part with a certain bias.

In one embodiment, the engaging member is a rod-shaped member, preferably having a circular cross-section. The cross-section of the rod-shaped member is preferably designed to conform to the engaging element, for example in that the cross-section is designed to conform to the engaging edge of the engaging element. The rod-shaped member having a circular cross-section can be easily connected to the engaging element in that case.

The operating element preferably comprises a stop member, which is connected to the engaging element in at least a first position of the operating element. The operating element is thus directly connected to the engaging element. As a result, a compact and reliable construction of the connecting means can be realised.

In one embodiment, the attachment parts are elongated in shape. The attachment parts are preferably elongated to such an extent that they can be fitted round two supports of the headrest of the seat. Attaching the attachment parts to two supports of the headrest leads to a stable placement of the device. The fact that the attachment parts are elongated in shape makes such a placement possible.

In a connected condition of the first and the second attachment part, at least one recess may be formed between said first and said second attachment part for receiving at least two supports of a headrest of the seat therein. The device can thus be fitted round two supports of the headrest. This makes it possible to realise a stable placement. Furthermore, at least two recesses may be formed between the first and the second attachment part in a connected condition of said first and said second attachment for receiving a respective support of the headrest therein. The device thus has two recesses, each of which can accommodate a support of the headrest. The recess makes it possible to realise a compact placement. The attachment parts can butt together near the recesses. This makes it possible to realise a solid connection of the first attachment part to the second attachment part.

The connecting means are preferably located substantially on a central part of the attachment parts.

The device is preferably designed so that the connecting means are located substantially between two supports of the headrest of the seat in an attached position of the device.

The holder for the electronic device may be connectable to the attachment part that is provided with the operating element. As a result, both the holder and the operating element are readily accessible.

Preferably, the device can be detachably attached to a rear side of the seat of the vehicle. In such an embodiment, the electronic device is easy to use for users present at the rear side of the seat, such as passengers seated on a rear seat of the vehicle, for example.

Further advantages and embodiments will be described below with reference to the drawings, in which:
Figure 1 is a perspective sectional view of a device according to the present invention;
Figures 2a-c are a perspective view and sectional views, respectively, of a device according to the present invention.

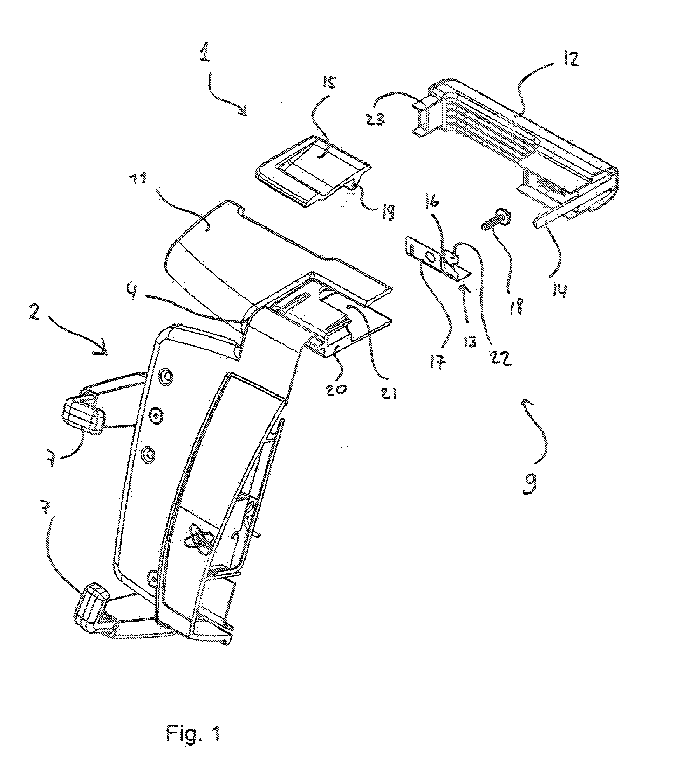

Figure 1 shows an exploded view of a device 1 for detachably attaching a holder 2 for an electronic device to a headrest of a vehicle-mounted seat. The device comprises a first attachment part 11 and a second attachment part 12 to be detachably connected thereto. In the illustrated embodiment, the holder 2 is pivotally connected to the first attachment part 11. The holder 2 for the electronic device is known per se to those skilled in the art and can be embodied in many ways. In the illustrated embodiment, the holder comprises adjustable hooks 7, by means of which the electronic device, for example a viewing screen of a DVD player, can be connected to the holder.

The device can be attached to a support of a headrest. The first attachment part 11 and the second attachment part 12 are to that end connected together in such a manner that the support of the headrest is positioned between the first attachment part 11 and the second attachment part 12. Thus the support of the headrest is clamped between the first attachment part 11 and the second attachment part 12, as it were. Such a manner of attachment is known per se to those skilled in the art.

The first attachment part 11 can be detachably connected to the second attachment part 12, using connecting means generally indicated at 9. The connecting means comprise a connecting plate of a leaf spring-like, i.e. elastically flexible material, placed on the first attachment part 11, and a pin-shaped connecting member 14, for example made of steel, placed on the second attachment part 12. The connecting plate 13 is connected to an internal part 20 of the first attachment part 11 by means of a fastener, such as a screw 18 in the illustrated embodiment. The connecting member 14 can be detachably connected to an engaging element 22 on the connecting plate 13.

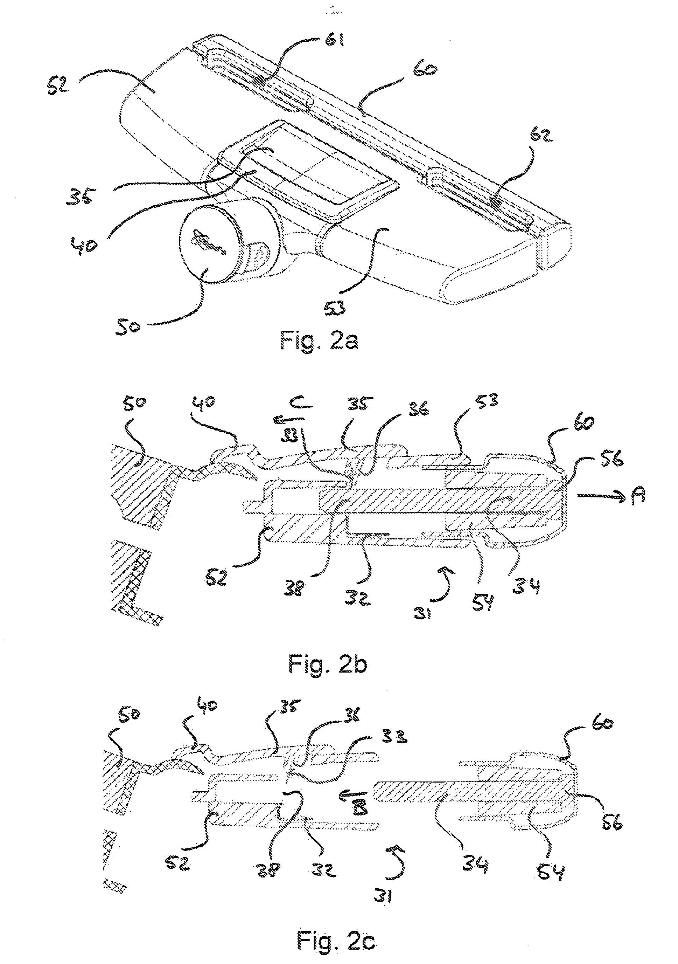

Present on the first attachment part 11 is an operating element 15. Said operating element 15 is located near an opening 21. The operating element is mounted for movement, more specifically forward and backward sliding movement, and is connected to the first attachment part. In the illustrated embodiment, a stop member 19 of the operating element 15 can be pushed against an upper side of the engaging element 22, causing the engaging element 22 to pivot slightly between the positions shown for the engaging element 33 in figures 2b and 2c.

The operation of the device shown in figure 1 will now be explained in more detail with reference to an embodiment of the device as shown in figure 2a. Said device comprises a first attachment part 52 and a second attachment part 60 detachably connected thereto. Two recesses 61, 62 are formed between the first attachment part 52 and the second attachment part 60, via which recesses the device can be attached to supports of a headrest. The first attachment part 52 is different from the embodiment shown in figure 1 in that a means of attachment 50 is provided, to which a holder (not shown) can be attached. The device is provided with connecting means and with an operating element 35 connected thereto. Figures 2b and 2c are detail views of the connecting means and the operating element.

Figure 2b shows a sectional view of connecting means 31 in a connected condition of the first attachment part 52 and the second attachment part 60, in which the connecting means 31 are in the release position. Figure 2c shows a sectional view in which the attachment parts 52 and 60 are disconnected from each other and the connecting means 31 are in the engaging position. As figure 2c shows, the term "engaging position" does not mean that the attachment parts are by definition connected together. Like parts are indicated by the same numerals in the respective figures 2a-2c.

Figure 2b shows a connecting plate 32 with an engaging element 33 provided with a recess 38, for example a hole. The connecting plate 32 is disposed on an internal part 52 of the first attachment part 60. An engaging member 34 is passed through the recess 38. Said engaging member is provided on the second attachment part 60 by means of a holder 54 and an engaging flange 56. The recess 38 of the engaging element 33 defines clamping edges, which engage the engaging member 34 in the engaging position (not shown in figure 2b!). Said engagement by the clamping edges prevents the engaging member from moving at least in a direction indicated by the arrow A. The first attachment part 52 and the second attachment part 60 are thus firmly connected together. The operating element 35 is movably connected to an upper wall 53 of the first attachment part 52. The engaging element 33 can be moved from an engaging position to the release position by moving the operating element 35 in the direction indicated by the arrow C, causing the stop member 36 to push against the engaging element 33. The engaging element will then partially pivot and assume a position in which the engaging element 33 is oriented substantially vertically in figure 2b. Said pivoting causes the clamping edges to be moved away from the engaging member 34. The pivoting movement of the engaging element 33 causes a projection of the recess on a plane perpendicular to the movement of the engaging member to become larger. In other words, said pivoting causes the effective passage 38 for the engaging member 34 to become larger, so that movement of the engaging member in a direction indicated by the arrow A becomes possible.

The operating element 15, 35 thus makes it possible to move the connecting means directly to a release position, so that the first and the second attachment part can also be directly disconnected from each other by a simple movement of the operating element 15, 35. The device 1 can thus be detached from the headrest of a vehicle-mounted seat in a relatively simple manner.

To connect the first and second attachment parts together it is not necessary, although possible, to move the engaging element to the release position by operating the operating element 35. As it is, simply pressing the engaging member 34 into the hole 32 will already have the same effect, because the upper side of the engaging member 34 will rub along part of the circumferential edge of the hole 38, thereby pushing the engaging element 33 into the release position, at least to such an extent that the engaging member 34 can move through the hole 32.

Those skilled in the art will appreciate that generally the connecting means 9 may also be configured differently. It is still possible in that case for an operating element to be movable to at least a first position so as to thus move the connecting means to a release position. It is for example possible to provide the engaging member 14 with toothings, which are engaged by a hook-shaped element mounted to the first attachment part 11. Said hook-shaped element will in that case be designed to engage the toothings such that the engaging member will be relatively fixedly connected to the hook-shaped element. The second attachment part 12 and the first attachment part 11 are thus prevented from becoming disconnected. The operating element 15 will in that case be connected to the hook-shaped element, so that the operating element, upon movement thereof to a first position, will move the connecting means to a release position, i.e. to a position in which the engaging member provided with toothings can move with respect to the hook-shaped element again.

In the illustrated embodiments, the operating element 15 is provided on an upper wall of the first attachment part 11. It is also possible, however, to position the operating element 15 on the second attachment part 12. The operating element 15 may in that case only be connected to the engaging element in a connected position of the first attachment part 11 and the second attachment part 12. Alternatively, it is possible to provide the operating element 15 and the connecting plate 13 with the engaging element 22 on the second attachment part 12, and to provide the connecting member, such as the engaging member 14, on the first attachment part 11.

In the embodiment shown in figure 1, the operating element 15 is slidably movable. Said movement takes place substantially parallel to the wall of the first attachment part 11. Although such an embodiment is very compact, it is also possible to configure the operating element 15 as a push button, for example, or as a rotary knob. Operating elements thus configured are also suitable for being moved to a first position for the purpose of moving the connecting means to a release position.

The operating element 15 may be provided with pushing means for moving the operating element to a second position. In said second position, the operating element makes it possible to move the connecting means to an engaging position. In the illustrated embodiment, said pushing means are formed by the engaging element 22. The engaging element 22 is to that end placed on the connecting plate 13 in such a manner that it has a certain bias, so that the engaging element 22 will function as a leaf spring. The upper side of the engaging element 22 engages the stop member 19 of the operating element and pushes it in the direction of the second position. The engaging element 22, which is configured as a leaf spring, also causes the engaging element to be pushed to an engaging position. Also other means may be provided for this purpose, of course, such as a coil spring, for example.

In the embodiment shown in figure 2, the engaging member 34 is provided with a notch 37. The contact edge of the engaging element 33 will engage said notch when said notch is located near said contact edge. The notch is provided at an end 37 of the engaging member. Upon engagement of the notch 37 by the contact edge, further movement of the engaging member of its own accord is no longer possible but requires an intentional action on the part of the user. The notch 37 thus prevents the connection from coming loose undesirably, for example due to vibrations.

In the appended figures and the description above, the present invention has been explained with reference to only a few embodiments. It will be understood, however, that may variants, which may or may not be obvious to those skilled in the art, are possible within the scope of the present invention, which is defined in the appended claims.

## Claims

1. A device (1) for detachably attaching a holder (2) for an electronic device to at least one support of a headrest of a vehicle-mounted seat, which device comprises a
first attachment part (11,52) and a second attachment part (12,60) to be detachably connected
to the first attachment part (11,52), one of said first (11,52) and said second attachment part (12,60) being connectable to the holder (2), said device comprising connecting means (9) connected to the first (11,52) and the second attachment (12,60) parts for detachably connecting the first attachment part (11,52) to the second attachment part (12,60), between the first (11,52) and second attachment parts (12,60) a receiving opening (61, 62) is formed in an interconnected position of said first attachment part (11,52) and said second attachment part (12,60) for attaching the device to the support of the headrest via said opening (61, 62), the device (1) further comprises at least one operating element (15,35) connected to the connecting means (9), **characterised in that** the operating element can be moved to at least a first position for moving the connecting means to a release position for the purpose of releasing the connection between the first attachment part and the second attachment part and so that the first (11,52) and second (12,60) attachment parts can be directly disconnected from each other.

2. A device according to claim 1, wherein the operating element (15,35) is movable to a second position for the purpose of thus moving the connecting means (9) to an engaging position in a connected condition of the first (11,52) and the second attachment part (12,60).

3. A device according to claim 2, wherein the device (1) is provided with pushing means (22) for pushing the operating element to the second position.

4. A device according to any one of claims 1-3, wherein the connecting means (9) comprise an engaging element (33) connected to the first (11,52) or the second attachment part (12,60) as well as an engaging member (34) connected to the other attachment part, wherein the engaging element (33) is designed to engage the engaging member (34) in an engaging position of the connecting means for the purpose of retaining the connected condition of the first (11,52) and the second attachment part (12,60), and wherein the connecting means (9) are designed so that the engaging member (34) is movable relative to the engaging element (33) in a release position.

5. A device according to claim 4, wherein at least part of a contour of the engaging element (33) defines an engaging edge designed to engage the engaging member (34).

6. A device according to claim 4 or 5, wherein the engaging element (33) is pivot-mounted.

7. A device according to claims 5 and 6, wherein the engaging element (33) is configured so that the engaging edge is designed to engage two substantially opposite wall parts of the engaging member (34) at an angle by pivoting movement.

8. A device according to claim 7, wherein the engaging element (33) comprises a recess (38), such as a hole (38) provided in the engaging element (33), which recess forms at least part of the engaging edge, wherein the shape of the recess and the cross-section shape of the engaging member are designed to conform to each other such that the engaging member (34) can move through the recess in a release position.

9. A device according to any one of claims 4-8, wherein the device is provided with pushing means, such as preferably a spring, for pushing the engaging element (33) to an engaging position, and preferably wherein the engaging element (33) is also designed to function as a leaf spring for forming the pushing means.

10. A device according to claims 3 and 9, wherein the pushing means for pushing the operating element to the second position are identical to the pushing means for pushing the engaging element (33) to an engaging position.

11. A device accordin to any one of claims 1-10, wherein at least one recess (61) is formed between the first (11,52) and the second attachment part (12,60) in a connected condition of said first and said second attachment part for receiving at least two supports of a headrest of the seat therein, and preferably wherein at least two recesses (61, 62) are formed between the first and the second attachment part in a connected condition of said first and said second attachment for receiving a respective support of the headrest therein.

12. A device according to any one of claims 1-11, wherein the connecting means (9) are located substantially on a central part of the attachment parts, and preferably wherein the device is designed so that the connecting means (9) are located substantially between two supports of the headrest of the seat in an attached position of the device.

13. A device according to claim 1-12, wherein the holder (2) for the electronic device is connectable to the attachment part (11,52) that is provided with the operating element (15,35).

14. A device according to claims 1-13, wherein the device can be detachably attached to a rear side of the seat.

15. A device according to any one of claims 1-14, wherein the operating element (15,35) is provided on a wall, preferably an upper wall, of the first (11,52) or the second attachment part (12,60), and preferably wherein the operating element (15,35) is movable substantially parallel to said wall.

## Patentansprüche

1. Vorrichtung (1) zur lösbaren Befestigung eines Halters (2) für eine elektronische Vorrichtung an wenigstens einem Träger einer Kopfstütze eines fahrzeugbefestigten Sitzes, wobei die Vorrichtung ein erstes Befestigungsteil (11, 52) und ein mit dem ersten Befestigungsteil (11, 52) lösbar verbundenes zweites Befestigungsteil (12, 60) aufweist, wobei eines des ersten und des zweiten Befestigungsteils (11, 52, 12, 60) mit dem Halter (2) verbindbar ist, wobei die Vorrichtung Verbindungsmittel (9) zum lösbaren Verbinden des ersten Befestigungsteils (11, 52) mit dem zweiten Befestigungsteil (12, 60) aufweist, die mit dem ersten (11, 52) und dem zweiten Befestigungsteil (12, 60) verbunden sind, wobei eine Aufnahmeöffnung (61, 62) zwischen dem ersten (11, 52) und dem zweiten Befestigungsteil (12, 60) in einer verbundenen Position des ersten Befestigungsteils (11, 52) und des zweiten Befestigungsteils (12, 60) zum Befestigen der Vorrichtung am Träger der Kopfstütze über die Öffnung (61, 62) ausgebildet ist, wobei die Vorrichtung (1) ferner wenigstens ein Bedienelement (15, 35) aufweist, das mit den Verbindungsmitteln (9) verbunden ist, **dadurch gekennzeichnet, dass** das Bedienelement in wenigstens eine erste Position zur Bewegung der Verbindungsmittel in eine Freigabeposition zu dem Zweck bewegt werden kann, die Verbindung zwischen dem ersten Befestigungsteil und dem zweiten Befestigungsteil freizugeben, und dass so das erste (11, 52) und das zweite Befestigungsteil (12, 60) direkt voneinander getrennt werden können.

2. Vorrichtung nach Anspruch 1, wobei das Bedienelement (15, 35) in eine zweite Position zu dem Zweck bewegbar ist, um so die Verbindungsmittel (9) in eine eingreifende Position in einem verbundenen Zustand des ersten Befestigungsteils (11, 52) und des zweiten Befestigungsteils (12, 60) zu bewegen.

3. Vorrichtung nach Anspruch 2, wobei die Vorrichtung (1) mit Druckmitteln (22) zum Drücken des Bedienelements in die zweite Position versehen ist.

4. Vorrichtung nach einem der Ansprüche 1-3, wobei die Verbindungsmittel (9) ein Eingriffselement (33), das mit dem ersten (11, 52) oder dem zweiten Befestigungsteil (12, 60) verbunden ist, sowie ein Eingriffsteil (34) aufweisen, das mit dem anderen Befestigungsteil verbunden ist, wobei das Eingriffselement (33) ausgebildet ist, um mit dem Eingriffsteil (34) in einer eingreifenden Position der Verbindungsmittel zu dem Zweck in Eingriff zu kommen, den verbundenen Zustand des ersten Befestigungsteils (11, 52) und des zweiten Befestigungsteils (12, 60) aufrecht zu halten, und wobei die Verbindungsmittel (9) derart ausgebildet sind, dass das Eingriffsteil (34) relativ zum Eingriffselement (33) in eine Freigabeposition bewegbar ist.

5. Vorrichtung nach Anspruch 4, wobei wenigstens ein Teil einer Kontur des Eingriffselements (33) eine Eingriffskante definiert, die ausgebildet ist, um mit dem Eingriffsteil (34) in Eingriff zu kommen.

6. Vorrichtung nach Anspruch 4 oder 5, wobei das Eingriffselement (33) schwenkbar gelagert ist.

7. Vorrichtung nach Anspruch 5 und 6, wobei das Eingriffselement (33) derart gestaltet ist, dass die Eingriffskante ausgebildet ist, um durch eine Schwenkbewegung mit zwei im Wesentlichen entgegengesetzten Wandteilen des Eingriffsteils (34) unter einem Winkel in Eingriff zu kommen.

8. Vorrichtung nach Anspruch 7, wobei das Eingriffselement (33) eine Ausnehmung (38) aufweist, zum Beispiel ein im Eingriffselement (33) vorgesehenes Loch (38), wobei die Ausnehmung wenigstens einen Teil der Eingriffskante bildet, wobei die Form der Ausnehmung und die Querschnittsform des Eingriffsteils so ausgebildet sind, um einander derart zu entsprechen, dass sich das Eingriffsteil (34) durch die Ausnehmung in eine Freigabeposition bewegen kann.

9. Vorrichtung nach einem der Ansprüche 4-8, wobei die Vorrichtung mit Druckmitteln versehen ist, zum Beispiel vorzugsweise einer Feder, zum Drücken des Eingriffselements (33) in eine eingreifende Position, und wobei vorzugsweise das Eingriffselement (33) auch ausgebildet ist, um als eine Blattfeder zur Bildung der Druckmittel zu fungieren.

10. Vorrichtung nach den Ansprüchen 3 und 9, wobei die Druckmittel zum Drücken des Bedienelements in die zweite Position identisch mit den Druckmitteln zum Drücken des Eingriffselements (33) in eine eingreifende Position sind.

11. Vorrichtung nach einem der Ansprüche 1-10, wobei wenigstens eine Ausnehmung (61 ) zwischen dem ersten Befestigungsteil (11, 52) und dem zweiten Befestigungsteil (12, 60) in einem verbundenen Zustand des ersten und des zweiten Befestigungsteils zur Aufnahme von wenigstens zwei Trägern einer Kopfstütze des Sitzes darin ausgebildet ist, und wobei vorzugsweise wenigstens zwei Ausnehmungen (61, 62) zwischen dem ersten und dem zweiten Befestigungsteil in einem verbundenen Zustand der ersten und der zweiten Befestigung zur Aufnahme eines jeweiligen Trägers der Kopfstütze darin ausgebildet sind.

12. Vorrichtung nach einem der Ansprüche 1-11, wobei die Verbindungsmittel (9) im Wesentlichen an einem zentralen Teil der Befestigungsteile angeordnet sind und wobei vorzugsweise die Vorrichtung derart ausgebildet ist, dass die Verbindungsmittel (9) im Wesentlichen zwischen zwei Trägern der Kopfstütze des Sitzes in einer befestigten Stellung der Vorrichtung ausgebildet sind.

13. Vorrichtung nach Anspruch 1-12, wobei der Halter (2) für die elektronische Vorrichtung mit dem Befestigungsteil (11, 52) verbindbar ist, das mit dem Bedienelement (15, 35) versehen ist.

14. Vorrichtung nach den Ansprüchen 1-13, wobei die Vorrichtung lösbar mit einer Rückseite des Sitzes verbunden werden kann.

15. Vorrichtung nach einem der Ansprüche 1-14, wobei das Bedienelement (15, 35) an einer Wand, vorzugsweise einer oberen Wand, des ersten Befestigungsteils (11, 52) oder des zweiten Befestigungsteils (12, 60) vorgesehen ist und wobei vorzugsweise das Bedienelement (15, 35) im Wesentlichen parallel zu der Wand bewegbar ist.

## Revendications

1. Dispositif (1) permettant de fixer de façon amovible un porte-objet (2) pour un dispositif électronique sur au moins un support d'un appui-tête d'un siège monté sur un véhicule, lequel dispositif comprend une première partie de fixation (11, 52) et une seconde partie de fixation (12, 60) à coupler de façon amovible à la première partie de fixation (11, 52), une de ladite première (11, 52) et de ladite seconde partie de fixation (12, 60) pouvant être couplée au porte-objet (2), ledit dispositif comprenant des moyens de couplage (9) couplés aux première (11, 52) et seconde (12, 60) parties de fixation pour coupler de façon amovible la première partie de fixation (11, 52) à la seconde partie de fixation (12, 60), entre les première (11, 52) et seconde parties de fixation(12, 60), une ouverture de réception (61, 62) est formée en une position intercouplée de ladite première partie de fixation (11, 52) et de ladite seconde partie de fixation (12, 60) pour fixer le dispositif au support de l'appui-tête via ladite ouverture (61, 62), le dispositif (1) comprend en outre au moins un élément de fonctionnement (15, 35) couplé aux moyens de couplage (9), **caractérisé en ce que** l'élément de fonctionnement peut être déplacé vers au moins une première position pour déplacer les moyens de couplage vers une position de relâchement dans le but de relâcher le couplage entre la première partie de fixation et la seconde partie de fixation et de sorte que les première (11, 52) et seconde (12, 60) parties de fixation puissent être désaccouplées directement l'une de l'autre.

2. Dispositif selon la revendication 1, dans lequel l'élément de fonctionnement (15, 35) est déplaçable vers une seconde position dans le but de déplacer ainsi les moyens de couplage (9) vers une position d'enclenchement dans une condition couplée des première (11, 52) et seconde parties de fixation (12, 60).

3. Dispositif selon la revendication 2, dans lequel le dispositif (1) est pourvu de moyens de poussée (22) pour pousser l'élément de fonctionnement vers la seconde position.

4. Dispositif selon l'une quelconque des revendications 1 à 3, dans lequel les moyens de couplage (9) comprennent un élément d'enclenchement (33) couplé à la première (11, 52) ou à la seconde partie de fixation (12, 60) ainsi qu'un organe d'enclenchement (34) couplé à l'autre partie de fixation, dans lequel l'élément d'enclenchement (33) est conçu pour enclencher l'organe d'enclenchement (34) en position d'enclenchement des moyens de couplage dans le but de retenir la condition couplée des première (11, 52) et seconde (12, 60) parties de fixation, et dans lequel les moyens de couplage (9) sont conçus de sorte que l'organe d'enclenchement (34) soit déplaçable par rapport à l'élément d'enclenchement (33) en position de relâchement.

5. Dispositif selon la revendication 4, dans lequel au moins une partie d'un contour de l'élément d'enclenchement (33) définit un bord d'enclenchement conçu pour déclencher l'organe d'enclenchement (34).

6. Dispositif selon la revendication 4 ou 5, dans lequel l'élément d'enclenchement (33) est monté sur pivot.

7. Dispositif selon les revendications 5 et 6, dans lequel l'élément d'enclenchement (33) est configuré de sorte que le bord d'enclenchement soit conçu pour enclencher deux parties de paroi sensiblement opposées de l'organe d'enclenchement (34) à un angle par un mouvement de pivotement.

8. Dispositif selon la revendication 7, dans lequel l'élément d'enclenchement (33) comprend un évidement (38), tel qu'un trou (38) disposé dans l'élément d'enclenchement (33), lequel évidement forme au moins une partie du bord d'enclenchement, dans lequel la forme de l'évidement et la forme en coupe de l'organe d'enclenchement sont conçues pour se conformer l'une à l'autre de sorte que l'organe d'enclenchement (34) puisse se déplacer à travers l'évidement en position de relâchement.

9. Dispositif selon l'une quelconque des revendications 4 à 8, dans lequel le dispositif est pourvu de moyens de poussée, tels qu'un ressort de préférence, pour pousser l'élément d'enclenchement (33) vers une position d'enclenchement, et de préférence dans lequel l'élément d'enclenchement (33) est également conçu pour fonctionner comme un ressort à lame pour former les moyens de poussée.

10. Dispositif selon les revendications 3 et 9, dans lequel les moyens de poussée pour pousser l'élément de fonctionnement vers la seconde position sont identiques aux moyens de poussée pour pousser l'élément d'enclenchement (33) en position d'enclenchement.

11. Dispositif selon l'une quelconque des revendications 1 à 10, dans lequel au moins un évidement (61) est formé entre la première (11, 52) et la seconde partie de fixation (12, 60) dans une condition couplée de ladite première et de ladite seconde partie de fixation pour y recevoir au moins deux supports d'un appui-tête du siège, et de préférence dans lequel au moins deux évidements (61, 62) sont formés entre la première et la seconde partie de fixation dans une condition couplée de ladite première et de ladite seconde partie de fixation pour y recevoir un support respectif de l'appui-tête.

12. Dispositif selon l'une quelconque des revendications 1 à 11, dans lequel les moyens de couplage (9) sont situés sensiblement sur une partie centrale des parties de fixation, et de préférence dans lequel le dispositif est conçu de sorte que les moyens de couplage (9) soient situés sensiblement entre deux supports de l'appui-tête du siège en position fixée du dispositif.

13. Dispositif selon les revendications 1 à 12, dans lequel le porte-objet (2) pour le dispositif électronique peut être couplé à la partie de fixation (11, 52) qui est pourvue de l'élément de fonctionnement (15, 35).

14. Dispositif selon les revendications 1 à 13, dans lequel le dispositif peut être fixé de façon amovible à un côté arrière du siège.

15. Dispositif selon l'une quelconque des revendications 1 à 14, dans lequel l'élément de fonctionnement (15, 35) est disposé sur une paroi, de préférence une paroi supérieure, de la première (11, 52) ou de la seconde partie de fixation (12, 60), et de préférence dans lequel l'élément de fonctionnement (15, 35) est déplaçable sensiblement parallèlement à ladite paroi.
